# EUROPEAN PATENT SPECIFICATION

(11) **EP 2 732 906 B1**
(45) Date of publication and mention of the grant of the patent: **08.11.2017**
(21) Application number: 12811007.9
(22) Date of filing: 06.07.2012
(51) Int. Cl.: B23K 35/363, B23K 35/362, B23K 35/36, B23K 35/28, B23K 103/10

(54) **FLUX FOR BRAZING ALUMINUM MATERIALS**
FLUSSMITTEL ZUM LÖTEN VON ALUMINIUMMATERIAL
FLUX POUR BRASAGE DE MATÉRIAUX EN ALUMINIUM

(30) Priority: 11.07.2011 JP 2011166002
(43) Date of publication of application: 21.05.2014
(73) Proprietor: Daiichi Kigenso Kagaku Kogyo Co., Ltd., Osaka-shi Osaka 559-0025 (JP)
(72) Inventor: NAGAE, Takahiro, Osaka-shi Osaka 559-0025 (JP)
(74) Representative: Nieuwenhuys, William Francis
(86) International application number: PCT/JP2012/067277
(87) International publication number: WO 2013/008729

(56) References cited:
- EP-A1- 0 239 642
- CN-A- 101 439 449
- JP-A- 3 264 192
- JP-A- 7 001 177
- JP-A- 61 162 295
- JP-A- 61 249 700
- JP-A- H03 264 191
- JP-A- H03 264 192
- JP-A- 2005 040 839
- JP-A- 2008 500 182
- US-A- 4 670 067

## Description

### Technical Field

The present invention relates to a flux for brazing aluminum-based materials, especially to a flux for brazing an aluminum-based material containing 1.5 wt% or more of magnesium.

### Background Art

Aluminum silicon (Al-Si) eutectic alloys, which have a slightly lower melting point than aluminum-based materials, have been mainly used as materials for brazing aluminum materials or aluminum alloy materials (hereinafter simply referred to as aluminum-based materials).

For good adhesion between a brazing material and an aluminum-based material, removal of oxide film, etc., present on the surface of the aluminum-based material is required. To remove such an oxide film, etc., it is necessary to supply a flux together with a brazing material to the portion to be brazed.

In recent years, non-corrosive or water-insoluble fluoride-based fluxes are mainly used in place of conventional chlorine-based fluxes.

Such fluoride-based fluxes have excellent features, such as almost no corrosivity, water solubility, or moisture absorbency compared to conventional chlorine-based fluxes.

Since containing magnesium increases the strength of aluminum alloys, it is generally known that aluminum alloy products such as heat exchangers, automobile parts, bicycle parts, and pipes are preferably produced by brazing aluminum alloy materials containing 1.5 wt% or more of magnesium that has high strength and excellent corrosion resistance. As a result, the thickness of the product is reduced, thus reducing the weight.

However, in brazing using a fluoride-based flux, when the magnesium content in an aluminum alloy is 1.5 wt% or more, magnesium is reacted with the fluoride-based flux to produce a high-melting-point compound on the aluminum alloy surface, which reduces the effect of the flux and inhibits wetting and permeation of a brazing material. Thus, the brazing properties are remarkably decreased, making it impossible to perform brazing sometimes.

Patent Literature 1 discloses "a flux composition for brazing Al materials, the composition mainly comprising a molten and coagulated product of a powdery mixture of Lif, AlF₃, and CsF, wherein the composition ratio of the three components is adjusted to within the range enclosed by four lines, i.e., line A connecting (2, 0, 98) and (2, 98, 0), line B connecting (0, 22, 78) and (78, 22, 0), line C connecting (30, 0, 70) and (30, 70, 0), and line D connecting (60, 40, 0) and (0, 70, 30) in the triangular coordinates indicating LiF mol%, AlF₃ mol%, and CsF mol%. Patent Literature 1 uses a Zn-Al solder (melt starting temperature: about 380°C or more)as a brazing material and has a problem of pitting corrosion due to the difference in corrosion potential.

Patent Literature 2 discloses a flux-containing Al alloy brazing material comprising a flux component, and Al, Si, and Cu as a brazing material component, wherein the Si content and the Cu content in the brazing material component are respectively 0.05 to 20 wt% and 5 to 10 wt%; the flux component contains KF, LiF, and CsF, and is a fluoride-based flux in which KF, LiF, and CsF are mixed in the range enclosed by a liquidus line at 550°C in the ternary phase diagram of KF-LiF-CsF; the brazing material component and the flux component are added in a weight ratio of 99.9:0.1 to 70:30; and the flux-containing Al alloy brazing material has a density of 90% or more of the theoretical value. Patent Literature 2 discloses that an Al-Si-Cu alloy (melt starting temperature: about 524°C or more) used as a brazing material can braze an A5052 alloy containing 2.2 to 2.8 wt% of magnesium; however, an Al-Si eutectic alloy (Si content: 7 to 12 wt%, A4343 alloy and A4047 alloy, melt starting temperature: about 577 to 615°C) used as a brazing material cannot braze the A5052 alloy.

Patent Literature 3 discloses a flux for brazing an aluminum-based material, comprising, expressed in mol%, potassium fluoride in an amount exceeding 0 mol% to less than 42 mol%, cesium fluoride in an amount of 2 mol% to less than 74 mol%, and aluminum fluoride in an amount of 26 to 67 mol%, or potassium fluoride in an amount of 42 to 54 mol%, cesium fluoride in an amount exceeding 20 to 32 mol%, and aluminum fluoride in an amount of 26 mol% to less than 38 mol%, with potassium and cesium present as fluoroaluminate, and free cesium fluoride and potassium fluoride not included. In Patent Literature 3, when an Al-Si eutectic alloy (Si content: 7 to 12 wt%, A4343 alloy, A4047 alloy, melt starting temperature: about 577 to about 615°C) is used as a brazing material, the limitation of the magnesium content is 1 wt% (A6061 alloy), and an A5052 alloy containing 2.2 to 2.8 wt% of magnesium cannot be brazed.

JP 3-264191 discloses a flux composition for brazing Al material.

### Citation List

### Patent Literature

PTL 1: JP5-005600B
PTL 2: JP7-001177A
PTL 3: JP5-051398B

### Summary of Invention

### Technical Problem

The present invention was accomplished in light of the above problems. An object of the present invention is to provide a flux for brazing aluminum-based materials, the flux being capable of brazing an A5052 alloy or the like containing 1.5 wt% or more of magnesium even when an Al-Si eutectic alloy (Si content: 7 to 12 wt%; A4343 alloy, A4047 alloy; melt starting temperature: about 577 to 615°C) is used as a brazing material.

### Solution to Problem

To attain the above object, the present inventors conducted extensive research. As a result, they found that, by containing specific amounts of CsF, LiF, AlF₃, and NaF and/or KF, it is possible to obtain a flux for brazing aluminum-based materials that is capable of brazing an A5052 alloy or the like containing 1.5 wt% or more of magnesium even when an Al-Si eutectic alloy is used as a brazing material.

Based on this finding, the present invention provides (1) a flux for brazing aluminum-based materials, the flux consisting of, expressed in mol%, 20 mol%≤CsF≤49 mol%, 1 mol%≤LiF≤58 mol%, 19 mol%≤AlF₃≤41 mol%, and 0.01 mol%≤NaF and/or KF≤19 mol%, and unavoidable impurities.

### Advantageous Effects of Invention

The flux for brazing aluminum-based materials of the present invention can braze an A5052 alloy or the like containing 1.5 wt% or more of magnesium even when an Al-Si eutectic alloy is used as a brazing material; thus, the present invention can be preferably used in this field.

The flux for brazing aluminum-based materials of the present invention can be used without any problems for brazing an aluminum-based material containing less than 1.5 wt% of magnesium or an aluminum-based material containing no magnesium.

### Brief Description of Drawings

Fig. 1 shows the method for evaluating the wetting and spread of the brazing material used in Example 1 of the present invention.
Fig. 2 shows the method for evaluating the fluidity of melting brazing material used in Example 2 of the present invention.
Fig. 3 shows the evaluation results of the fluidity of melting brazing material in Example 2 of the present invention. Description of Embodiments

The flux for brazing aluminum-based materials of the present invention is explained in detail below.

The present invention is a flux for brazing aluminum-based materials consisting of, expressed in mol%, 20 mol%≤CsF≤49 mol% (preferably 21 mol%≤CsF≤48 mol%), 1 mol%≤LiF≤58 mol% (preferably 2 mol%≤LiF≤57 mol%), 19 mol%≤AlF₃≤41 mol% (preferably 20 mol%≤AlF₃≤40 mol%), and 0.01 mol%≤NaF and/or KF≤19 mol%, (preferably 1 mol%≤NaF and/or KF≤18 mol%), and unavoidable impurities. The flux for brazing of the present invention is a mixture or compound consisting of the above components, and can be used as a powder or a slurry dissolved in a solvent such as water and alcohol.

NaF and KF may be used singly or as a mixture.

When the proportion of CsF, LiF, AlF₃", and NaF and/or KF composing the flux is outside the above range, the melting temperature is increased. Further, due to the reaction with the magnesium in the aluminum alloy, sufficient brazing properties are not attained, which makes it impossible to fully achieve the object of the present invention.

As a brazing material, it is preferable to use a versatile Al-Si eutectic alloy (Si content: 7 to 12 wt%; A4343 alloy, A4047 alloy; melt starting temperature: about 577 to 615°C); however, other brazing materials can be also used. Zinc, copper, and other components can be added to adjust the flow starting temperature, solidus temperature, and liquidus temperature.

The aluminum-based material to which the flux of the present invention can be applied may be a material containing no magnesium; however, the flux can be preferably used for an A5052 alloy or the like containing 1.5 wt% or more of magnesium.

Although the upper limit of the magnesium content in the aluminum alloy is not particularly limited, it is about 5 wt% considering the content of magnesium in the magnesium-containing aluminum alloy according to JIS (magnesium content in A5082 alloy: 4 to 5 wt%, magnesium content in A5182 alloy: 4 to 5 wt%, and magnesium content in A5086 alloy: 3.5 to 4.5 wt%).

A brazed article to which the present invention is applied can have any structure as long as the brazing of aluminum alloy material described below can be performed.
(1) As is a fin material or connector material of a heat exchanger, a bare material of a magnesium-containing aluminum alloy is brazed using a brazing material in the form of brazing sheet or a preplaced brazing material, or brazed using a brazing material in the form of brazing sheet in which magnesium is added to a core material.
(2) Face-fed brazing is performed on a pipe or block of magnesium-containing aluminum alloy, or brazing is performed using a cored wire in which a flux is coated with a brazing material.

The flux of the present invention can also be described as follows. (i) A flux for brazing aluminum-based materials,
the flux being used when an Al-Si eutectic alloy is used as a brazing material, and
the flux consisting of, expressed in mol%, 20 mol%≤CsF≤49 mol%, 1 mol%≤LiF≤58 mol%, 19 mol%≤AlF₃≤41 mol%, and 0.01 mol%≤NaF and/or KF≤19 mol%, and unavoidable impurities. (ii) Use of a flux for brazing aluminum-based materials,
the flux being used when an Al-Si eutectic alloy is used as a brazing material, and the flux consisting of, expressed in mol%, 20 mol%≤CsF≤49 mol%, 1 mol%≤LiF≤58 mol%, 19 mol%≤AlF₃≤41 mol%, and 0.01 mol%≤NaF and/or KF≤19 mol%, and unavoidable impurities. (iii) A method for using a flux for brazing aluminum-based materials when an Al-Si eutectic alloy is used as a brazing material,
the flux consisting of, expressed in mol%, 20 mol%≤CsF≤49 mol%, 1 mol%≤LiF≤58 mol%, 19 mol%≤AlF₃≤41 mol%, and 0.01 mol%≤NaF and/or KF≤19 mol%, and unavoidable impurities.

### Examples

The Examples of the present invention are detailed below.

### Example 1

First, flux powders having the composition shown in Tables 1 and 2 were prepared. Subsequently, aluminum-based A5052 alloy plates were prepared (width: 50 mm, length: 50 mm, thickness: 1 mm; magnesium content: 2.2 to 2.8 wt%).

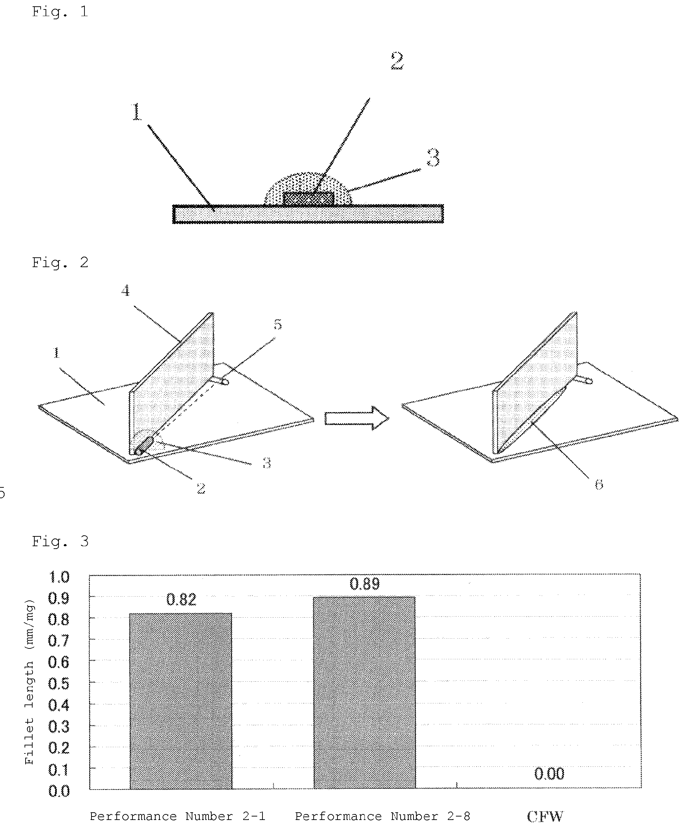

As shown in Fig. 1, brazing material (2) (130 mg) formed of A4047 alloy and flux (3) (60 to 130 mg) were applied to the surface of A5052 alloy plate (1), and heated from the bottom over a gas burner to evaluate the wetting and spread of the brazing material. Tables 1 and 2 show the results.

CF-5 (cesium flux produced by Daiichi Kigenso Kagaku Kogyo Co., Ltd. (performance number C15)) was used as a comparison sample.

NaF in performance numbers 2-1 and 2-8 of Table 2, which was a typical component of the present invention, was replaced with KF, and the same evaluation was performed. Table 3 shows the results.

**Table 1**

| Performance number | Composition of flux (mol%) | | | | Brazing properties on A5052 (see note) |
|---|---|---|---|---|---|
| | CsF | LiF | NaF | AlF₃ | |
| 1 | 50 | 15 | 5 | 30 | X |
| 2 | 48 | 17 | 5 | 30 | ○ |
| 3 | 46 | 19 | 5 | 30 | ○ |
| 4 | 45 | 20 | 5 | 30 | ○ |
| 5 | 44 | 21 | 5 | 30 | ○ |
| 6 | 40 | 25 | 5 | 30 | ○ |
| 7 | 35 | 30 | 5 | 30 | ○ |
| 8 | 28 | 38 | 5 | 30 | ○ |
| 9 | 25 | 40 | 5 | 30 | ○ |
| 10 | 23 | 37 | 10 | 30 | ○ |
| 11 | 21 | 39 | 10 | 30 | ○ |
| 12 | 19 | 41 | 10 | 30 | X |
| 13 | 20 | 59 | 1 | 20 | X |
| 14 | 22 | 57 | 1 | 20 | ○ |
| 15 | 24 | 55 | 1 | 20 | ○ |
| 16 | 25 | 50 | 5 | 20 | ○ |
| 17 | 25 | 45 | 5 | 25 | ○ |
| 18 | 30 | 40 | 5 | 25 | ○ |
| 19 | 35 | 35 | 5 | 25 | ○ |
| 20 | 40 | 25 | 5 | 30 | ○ |
| 21 | 40 | 20 | 5 | 35 | ○ |
| 22 | 40 | 15 | 10 | 35 | ○ |
| 23 | 40 | 10 | 15 | 35 | ○ |
| 24 | 41 | 8 | 15 | 36 | ○ |
| 25 | 41 | 6 | 15 | 38 | ○ |
| 26 | 41 | 4 | 15 | 40 | ○ |
| 27 | 43 | 2 | 15 | 40 | ○ |
| 28 | 45 | 0 | 15 | 40 | X |
| 29 | 35 | 18 | 5 | 42 | X |
| 30 | 35 | 20 | 5 | 40 | ○ |
| 31 | 35 | 22 | 5 | 38 | ○ |
| 32 | 35 | 25 | 5 | 35 | ○ |
| 33 | 35 | 32 | 5 | 28 | ○ |
| 34 | 30 | 45 | 5 | 20 | ○ |
| 35 | 30 | 47 | 5 | 18 | X |
| 36 | 39 | 26 | 0.01 | 34.99 | ○ |
| 37 | 39 | 26 | 1 | 34 | ○ |
| 38 | 37 | 25 | 5 | 33 | ○ |
| 39 | 35 | 23 | 10 | 32 | ○ |
| 40 | 33 | 22 | 15 | 30 | ○ |
| 41 | 32 | 21 | 18 | 29 | ○ |
| 42 | 31 | 21 | 20 | 28 | X |

| | | | | | |
|---|---|---|---|---|---|
| Note: Evaluation of wetting of brazing material ○: Sufficient wetting and spread of brazing material. X: Almost no wetting or spread of brazing material. | | | | | |

**Table 2**

| Performance number | Composition of flux (mol%) | | | | Brazing properties on A5052 (see note) |
|---|---|---|---|---|---|
| | CsF | LiF | NaF | AlF₃ | |
| 2-1 | 38 | 25 | 6 | 30 | ○ |
| 2-2 | 37 | 24 | 6 | 33 | ○ |
| 2-3 | 36 | 23 | 6 | 35 | ○ |
| 2-4 | 34 | 23 | 6 | 38 | ○ |
| 2-5 | 32 | 36 | 9 | 23 | ○ |
| 2-6 | 31 | 35 | 9 | 25 | ○ |
| 2-7 | 30 | 34 | 9 | 28 | ○ |
| 2-8 | 29 | 32 | 8 | 30 | ○ |
| 2-9 | 28 | 31 | 8 | 33 | ○ |
| 2-10 | 29 | 32 | 10 | 30 | ○ |
| 2-11 | 29 | 31 | 11 | 29 | ○ |
| 2-12 | 27 | 30 | 15 | 28 | ○ |
| 2-13 | 44 | 25 | 1 | 30 | ○ |
| 2-14 | 27 | 49 | 1 | 23 | ○ |
| C1 | 49 | 32 | 8 | 10 | X |
| C2 | 26 | 28 | 20 | 26 | X |
| C3 | 22 | 25 | 30 | 23 | X |
| C4 | 54 | 23 | 1 | 23 | X |
| C5 | 12 | 36 | 15 | 38 | X |
| C6 | 21 | 60 | 1 | 18 | X |
| C7 | 25 | 60 | 1 | 14 | X |
| C8 | 17 | 60 | 1 | 23 | X |
| C9 | 28 | 18 | 5 | 50 | X |
| C10 | 38 | 42 | 11 | 10 | X |
| C11 | 21 | 23 | 6 | 50 | X |
| C12 | 48 | 32 | 0 | 20 | X |
| C13 | 45 | 30 | 0 | 25 | X |
| C14 | 36 | 24 | 0 | 40 | X |
| C15 (CF-5) | 55 | - | - | 45 | X |

| | | | | | |
|---|---|---|---|---|---|
| Note: Evaluation of wetting of brazing material ○: Sufficient wetting and spread of brazing material. X: Almost no wetting or spread of brazing material. | | | | | |

Tables 1 and 2 confirmed that good wetting and spread of brazing material was obtained when the flux comprising, expressed in mol%, 20 mol%≤CsF≤49 mol%, 1 mol%≤LiF≤58 mol%, 19 mol%≤AlF₃≤41 mol%, and 0.01 mol%≤NaF and/or KF≤19 mol% was used.

**Table 3**

| Performance number | Composition of flux (mol%) | | | | Brazing properties on A5052 (see note) |
|---|---|---|---|---|---|
| | CsF | LiF | KF | AlF₃ | |
| 3-1 | 38 | 25 | 6 | 30 | ○ |
| 3-2 | 29 | 32 | 8 | 33 | ○ |

| | | | | | |
|---|---|---|---|---|---|
| Note: Evaluation of wetting of brazing material ○: Sufficient wetting and spread of brazing material. X: Almost no wetting or spread of brazing material. | | | | | |

Table 3 confirmed that good wetting of brazing material was obtained even when the component was changed from NaF to KF.

### Comparative Example 1 (corresponding to the additional test of Patent Literature 2)

Wetting and spread of brazing material was evaluated according to the same method as in Example 1 except that the composition of the flux was changed to the composition shown in Table 4. Table 4 shows the results.

**Table 4**

| Performance number | Composition of flux (mol%) | | | Brazing properties on A5052 (see note) |
|---|---|---|---|---|
| | KF | LiF | CsF | |
| 4-1 | 23 | 36 | 41 | X |
| 4-2 | 23 | 51 | 26 | X |
| 4-3 | 30 | 24 | 46 | X |
| 4-4 | 38 | 30 | 32 | X |

| | | | | |
|---|---|---|---|---|
| Note: Evaluation of wetting of brazing material ○: Sufficient wetting and spread of brazing material. X: Almost no wetting or spread of brazing material. | | | | |

Table 4 indicates that A5052 (magnesium content: about 2.5 wt%) could not be brazed according to the method of Patent Literature 2.

### Comparative Example 2 (corresponding to the additional test of Patent Literature 3)

Wetting and spread of brazing material was evaluated according to the same method as in Example 1 except that the composition of the flux was changed to the composition shown in Table 5. Table 5 shows the results.

**Table 5**

| Performance number | Composition of flux (mol%) | | | Brazing properties on A5052 (see note) |
|---|---|---|---|---|
| | KF | AlF₃ | CsF | |
| 5-1 | 48 | 28 | 24 | X |
| 5-2 | 38 | 34 | 28 | X |
| 5-3 | 20 | 48 | 32 | X |

| | | | | |
|---|---|---|---|---|
| Note: Evaluation of wetting of brazing material ○: Sufficient wetting and spread of brazing material. X: Almost no wetting or spread of brazing material. | | | | |

Table 5 indicates that A5052 (magnesium content: about 2.5 wt%) could not be brazed according to the method of Patent Literature 3.

### Example 2

Evaluation of the fluidity of melting brazing material was performed by using the fluxes of performance numbers 2-1 and 2-8 in Table 2, which had the typical composition ratios of the present invention. As a sample for comparison, CFW (cesium-flux-cored wire produced by Daiichi Kigenso Kagaku Kogyo Co., Ltd.: CF-5 in an amount of 25 to 36 wt% was added to an Al-Si eutectic alloy) was used.

A5052 alloy plate (1) (50 mm (width) x 50 mm (length) x 1.0 mm (thickness)) and A5052 alloy plate (4) (25 mm (width) x 50 mm (length) x 1.0 mm (thickness)) were placed as shown in Fig. 2 by providing a clearance using spacer rod (5) with a diameter of 0.55 mm. Brazing material (2) formed of A4047 alloy and flux (3) were added in amounts of 54 mg and 24 mg, respectively. Brazing material (2) and flux (3) was heated at 600°C for 30 seconds, and the length of fillet (6) formed was measured. Comparison was performed using the length of the fillet per mg of the brazing material. Fig. 3 shows the results.

As shown in Fig. 3, although the use of the existing cesium flux could not provide a fillet, the use of the flux of the present invention provided a good fillet on A5052.

### Explanation of Numerals

1: A5052 alloy plate
2: Brazing material
3: Flux
4: A5052 alloy plate
5: Spacer rod
6: Fillet

## Claims

1. A flux for brazing aluminum-based materials, the flux consisting of, expressed in mol%, 20 mol%≤CsF≤49 mol%, 1 mol%≤LiF≤58 mol%, 19 mol%≤AlF₃≤41 mol%, and 0.01 mol%≤NaF and/or KF≤19 mol%, and unavoidable impurities.

## Patentansprüche

1. Flussmittel zum Hartlöten von Materialien auf Aluminiumbasis, wobei das Flussmittel, in Mol-% ausgedrückt, aus Folgendem besteht: 20 Mol-%≤CsF≤49 Mol-%, 1 Mol-%≤LiF≤58 Mol-%, 19 Mol-%≤AlF₃≤41 Mol-% und 0,01 Mol-%≤NaF und/oder KF≤19 Mol-% und unvermeidbaren Verunreinigungen.

## Revendications

1. Flux pour brasage de matériaux à base d'aluminium, le flux consistant en, exprimé en mole %, 20 mole%≤CsF≤49 mole%, 1 mole%≤LiF≤58 mole%, 19 mole%≤AlF₃≤41 mole%, et 0,01 mole%≤NaF et/ou KF≤19 mole%, et en impuretés inévitables.
